# EUROPÄISCHE PATENTSCHRIFT

(11) **EP 3 558 726 B1**
(45) Veröffentlichungstag und Bekanntmachung des Hinweises auf die Patenterteilung: **06.01.2021**
(21) Anmeldenummer: 17800869.4
(22) Anmeldetag: 21.11.2017
(51) Int. Cl.: B60G 21/055, B60G 17/0185

(54) **SICHERHEITSFUNKTION UND STEUERGERÄT ZUR ÜBERWACHUNG SOWIE STEUERUNG VON WANKSTABILISATOREN**
SAFETY FUNCTION AND CONTROL DEVICE FOR MONITORING AND CONTROLLING OF ROLL STABILIZERS
FONCTION DE SÉCURITÉ ET CONTRÔLEUR POUR LA SURVEILLANCE ET LA COMMANDE DE STABILISATEURS DE ROULIS

(30) Priorität: 22.12.2016 DE 102016226072
(43) Veröffentlichungstag der Anmeldung: 30.10.2019
(73) Patentinhaber: ZF Friedrichshafen AG, 88046 Friedrichshafen (DE)
(72) Erfinder: EILERS, Hubertus, 49176 Hilter a.T.W. (DE)
(74) Vertreter: ZF Friedrichshafen AG
(86) Internationale Anmeldenummer: PCT/EP2017/079832
(87) Internationale Veröffentlichungsnummer: WO 2018/114173

(56) Entgegenhaltungen:
- EP-A2- 1 362 720
- WO-A1-2004/089663
- WO-A1-2007/071853
- WO-A1-2016/096292
- DE-A1-102008 024 092
- DE-A1-102008 041 417
- JP-A- S6 474 115

## Beschreibung

Die Erfindung betrifft einen elektrisch verstellbaren Wankstabilisator für ein Fahrwerk eines Kraftfahrzeugs mit einem zwischen zwei Teilabschnitten des Wankstabilisators angeordneten Aktuator, der zur Erzeugung eines zwischen den Teilabschnitten wirkenden Torsionsmoments ausgebildet ist.

In Fahrwerken von Kraftfahrzeugen sind die Räder bzw. Radaufhängungen der jeweiligen Achse über Stabilisatoren untereinander und mit dem Fahrzeugaufbau verbunden, um insbesondere bei Kurvenfahrten die aufgrund von Querbeschleunigungen auftretende Wankneigung des Fahrzeugaufbaus, also dessen Seitenneigung in kurvenäußere Richtung, zu reduzieren. Beim einseitigen Einfedern des Rades gegenüber dem Fahrzeugaufbau bei einer Kurvenfahrt des Kraftfahrzeugs übt der als Drehstabfeder ausgebildete Stabilisator, auch Wankstabilisator genannt, der an seinen Enden mit den Rädern bzw. Radaufhängungen verbunden ist, eine kopierende Bewegung auf das gegenüberliegende Rad bzw. die Radaufhängung aus. Daraus ergibt sich eine verminderte Seitenneigung. Durch gezielte Wankabstützungen an Vorder- und Hinterachse des Kraftfahrzeugs kann dessen Eigenlenkverhalten verbessert und die Wankneigung vermindert werden. Bei einem einseitigen Einfedern einer der Räder bzw. Radaufhängungen z.B. aufgrund eines Schlaglochs oder einer Erhebung auf der Fahrbahn, wirkt sich die Kopierfunktion des Wankstabilisators in einer ungewünschten Wankbewegung des Fahrzeugs aus.

Durch einen Aktuator, der zwischen zwei Teilabschnitten eines geteilten Stabilisators angeordnet wird und diese zueinander verdrehen kann, wie z.B. in der DE 10 2008 024 092 A1 offenbart, können zusätzlich gezielte Stabilisierungsmomente erzeugt werden, was zu einer aktiven Verminderung von Wankbewegungen und damit einer Optimierung des Eigenlenk- und Lastwechselverhaltens des Fahrwerks führt.

Der Aktuator besteht dabei häufig aus einem elektrisch bzw. elektronisch geregelten Schwenkmotor, der als mit einem Übersetzungsgetriebe verbundenen Elektromotor ausgeführt sein kann. Die an den Teilabschnitten des Stabilisators erzielte Verstellung wird kontinuierlich an die jeweilige Fahrsituation angepasst, so dass eine Seitenneigung des Fahrzeugaufbaus reduziert bzw. eine Wankbewegung vermindert werden kann.

Um den abgesicherten Betrieb oder mit anderen Worten einen für Leib und Leben der Fahrzeuginsassen gefahrlosen Betrieb zu gewährleisten, werden Funktionen benötigt, die bestimmten Sicherheitsausführungen bzw. Sicherheitsstandards genügen. In der Automobilindustrie sind hierzu Anforderungen festgelegt, die in verschiedenen Stufen eingeteilt sind. Hierzu sind sogenannte Automotive Safety Integrity Level festgelegt worden, wobei die Level (=Stufen) sich an einer Gefährdungsanalyse und Risikoabschätzung orientieren. Es werden dazu die potentiellen Gefährdungen eines Systems analysiert und die möglichen Fehlfunktionen in spezifischen Fahrsituationen je nach eingeschätzter Gefährdung bzw. Anforderung in unterschiedlichen Sicherheitsanforderungsstufen von A bis D klassifiziert. Dabei ist Level/Stufe A als niedrigste und D als höchste Einstufung zu betrachten (ASIL-A bis ASIL-D). Ist ein System oder ein Sensor nach einem höheren Level eingestuft, so ist festgelegt, dass durch eine sogenannte Dekomposition die Sicherheitseinstufung subsummiert werden kann. So kann z.B. eine ASIL-B-Einstufung durch eine mehrfach ASIL-A und ASIL-A-Einstufung aufgelöst werden. Eine ASIL-C-Einstufung kann durch eine mehrfach ASIL-A und ASIL-B Einstufung aufgelöst werden.

Diese Einstufung bringt es mit sich, dass Sensoren für eine höhere Anforderung und somit für eine höhere Gefährdung aufwändiger und damit auch komplexer und teurer sind. Mit anderen Worten sind Bauteile für eine niedrige Einstufung deutlich günstiger hinsichtlich der Kosten und des Entwicklungsaufwands.

Die Erfindung betrifft das Problem den abgesicherten Betrieb derart zu gestalten, dass eine an sich mit einem höheren Level geforderte Absicherung einer die erwähnte Sicherheit gewährende Funktion bzw. ein System durch eine zumindest 2-stufige Absicherung substituiert bzw. ersetzt wird. Anstatt eines Drehmomentsensors mit einer höheren Einstufung z.B. in ASIL-B zur Erfassung des an dem Wankstabilisator anliegenden Drehmoments einzusetzen, wird vorgeschlagen, dass die Erfassung einer unbeabsichtigten Drehmomentabgabe aufgelöst wird in ein höherwertiges und eine niedrigeres Sicherheitsziel, die entsprechend der Gefahrenanalyse unterschiedlich schwer zu kontrollierende Gefahrensituationen darstellen. Diese Sicherheitsziele könnten beispielsweise in ASIL-B und ASIL-A unterschieden bzw. aufgelöst werden.

Oberstes Gebot muss es sein, dass das Fahrzeug bei Auftreten eines Fehlers vom Fahrer kontrollierbar weitergeführt werden kann. Gemäß eines ersten Sicherheitsziels soll nach Möglichkeit eine invertierte Drehmomentabgabe in dynamischen Fahrsituationen vermieden werden. Unter "invertiert" ist hier die Drehmomentabgabe mit entgegengesetztem oder falschem Vorzeichen mit weiterer Erhöhung des Wankwinkels zu verstehen, welches dazu führt, dass das Fahrzeug stark wankt. Die Erhöhung kann zu einem schwer zu kontrollierbaren Fahrzustand mit Übersteuern des Fahrzeugs führen, da das Fahrzeug in der jeweiligen dynamischen Fahrsituation, z.B. bei Kurvenfahrt, weiter aus der Kurve gedrängt würde, weil das invertierte Drehmoment der Wankabstützung entgegenwirkt. Dieser Notfall wird daher als höherwertig, z.B. in ASIL-B eingestuft. Würde man diesen Notfall allein über einen Drehmomentsensor bzw. dessen Signal abfangen wollen, so müsste in diesem Fall ein ASIL-B-Sensor eingesetzt werden. Wie gesagt, ist das starke Wanken in einer Kurvenfahrt schwer beherrschbar. Wenn zusätzlich ein Drehmoment mit entgegengesetztem Vorzeichen aufgeprägt wird bildet sich eine fehlerhafte Wankmomentverteilung zwischen Vorder- und Hinterachse aus. Dieses kann zu einem plötzlichen Übersteuern führen, welches generell schwer kontrollierbar ist.

Um diese Fehlfunktion und das damit verbundene hohe Risiko zu vermeiden, wird gemäß der Erfindung der Aktuator in Abhängigkeit von bestimmten Fahrzeugwerten, bevorzugt zumindest vom Lenkwinkel und/oder der Fahrgeschwindigkeit und/oder der Querbeschleunigung, hinsichtlich seiner Stellmöglichkeiten eingeschränkt. Mit anderen Worten wird der Stellweg in die betreffende Stellrichtung begrenzt, so dass Verdrehungen hinsichtlich des Stellweges der beiden Stabilisatorhälften in Abhängigkeit der vorgenannten Fahrzeugwerte nicht überschritten werden können. Hierzu kann ein im Aktuator eingesetzter Drehwinkelsensor die Verdrehung erfassen, wobei in dem Steuergerät Schwellwerte quasi als virtueller Anschlag hinterlegt sind, wobei das Steuergerät eine Überschreitung nicht zulässt. Somit kann der Notfall bzw. sicherheitsrelevante Fall nicht eintreten und es kann die ASIL-Einstufung reduziert werden. Die Begrenzungen können als ein Korridor verstanden werden, der durch maximale Schwellwerte begrenzt ist, so dass sich je Stellrichtung maximal mögliche Verstellwege bzw. Verdrehwinkel ergeben.

Eine Verstellung, die eine weitere Erhöhung des aktuellen Wankwinkels bewirken würde, wird damit wirkungsvoll verhindert, so dass das Fahrzeug bei Kurvenfahrt nicht noch weiter in kurvenäußere Richtung bewegt wird oder übersteuert und damit kontrollierbar weitergeführt werden kann.

Die Schwellwerte sind dabei nicht als starre Werte zu verstehen. Diese können als Kennlinie in einem Steuergerät hinterlegt sein, so dass in Abhängigkeit von den vorgenannten Fahrzeugwerten die Schwellwerte höher oder geringer ausfallen können und sich z.B. bei höherer Geschwindigkeit ein schmalerer Korridor ergibt als bei einer vergleichsweisen niedrigeren Geschwindigkeit. Für den geschilderten Notfall erfolgt die Dynamikbegrenzung durch den Korridor unabhängig vom im Wankstabilisator eingesetzten Drehmomentsensor, weshalb für diesen die ASIL-Einstufung reduziert werden kann. Statt eines ASIL-B-Sensors kann somit beispielsweise ein ASIL-A-tauglicher Sensor eingesetzt werden.

Ein zweites Sicherheitsziel ist die Vermeidung einer zu hohen Drehmomentabgabe. Dabei kann je nach Verdrehrichtung das Drehmoment als zu hohes positives oder zu hohes negatives Drehmoment verstanden werden. Ein zu hohes Drehmoment kann über den im elektrischen Wankstabilisator vorhandenen Drehmomentsensor ausgelöst werden, wenn dieser fehlerhafte Werte an das Steuergerät liefert. Dieses würde zu einer nicht korrekten bzw. ungleichen Wankmomentverteilung zwischen Vorder- und Hinterachse führen.

Aufgrund der Tatsache, dass ein zu hohes Drehmoment nicht zwangsläufig ein Verlassen des oben genannten Korridors bewirkt, lässt sich ein zu hohes Drehmoment nicht mittels des Korridors bzw. einer Einschränkung der Stellrichtung oder des Stellweges abfangen, wie zum weiter oben genannten ersten Sicherheitsziel erläutert. Ein zu hohes Drehmoment bedeutet nämlich nicht zwangsläufig, dass in Abhängigkeit von Fahrzeugwerten in die entgegengesetzte Richtung gestellt wird. Der Einfluss eines zu hohen Drehmoments bewirkt verglichen mit der o.g. Situation insgesamt weniger kritische Fahrzustände, so dass hier ein Sicherheitsziel mit einer niedrigeren Sicherheitsstufe, also z.B. ASIL-A statt ASIL-B gewählt werden kann.

Zur Erfassung des auf den Wankstabilisator wirkenden Drehmoments wird ein Drehmomentsensor eingesetzt. Mittels des zumindest einen Drehmomentsensors wird ein Signal erfasst und mit in dem Steuergerät hinterlegten Kennwerten verglichen. Dieses wird in Abhängigkeit von bestimmten Fahrzeugwerten, vorzugsweise von Fahrzeuggeschwindigkeit und/oder Lenkwinkel und/oder Querbeschleunigung vorgenommen, um die erfassten Werte zu plausibilisieren. Mit anderen Worten wird der Vergleich angestellt, um festzustellen, ob in der vorliegenden Fahrsituation ein vom Drehmomentsensor erfasstes Drehmoment realistisch ist. Zur sicheren Erfassung eines Fehlerfalls muss das vom Drehmomentsensor abgegebene Signal eine ausreichende Genauigkeit aufweisen. Deshalb wird eine maximale Toleranz für das Drehmomentsignal festgelegt nach der hier vorgesehen ASIL-Einstufung, vorzugsweise nach einer niedrigen ASIL-A-Einstufung. Diese Toleranz kann bei etwa ± 200 Nm liegen, so dass bei Einsatz einer Elastomerentkopplung zur Geräuschminimierung innerhalb des Aktuators ebenfalls eine sichere Drehmomenterfassung ermöglicht ist.

Die Fehlersituation durch ein zu hohes Drehmoment ist für den durchschnittlichen Fahrer an sich leichter zu kontrollieren, da ein eher höheres Drehmoment zu einer zwar fehlerhaften, aber dennoch weiteren, verstärkten Wankabstützung führt. Bei dieser Betrachtung wird davon ausgegangen, dass durch das zu hohe Drehmoment es nicht zu einer negativen Beeinflussung der Wankmomentverteilung zwischen Vorder- und Hinterachse kommt. Dennoch kann ein zu hohes Wankmoment in äußerst hochdynamischen Fahrsituationen ein Problem darstellen. Es kann sein, dass dem Fahrer ein Gefühl vermittelt wird, das Fahrzeug sei noch stabil zu fahren. Eine hohe Querbeschleunigung kann jedoch möglicherweise, z.B. bei Zunahme der Geschwindigkeit des Fahrzeugs, bestehendem oder verstärkt auftretendem Fahrer doch nicht mehr vom Rad auf die Straße übertragen werden, weil von den Rädern keine Seitenführungskraft mehr übertragen werden kann. Insbesondere an der Vorderachse kann dann ein Untersteuern auftreten. Untersteuern ist jedoch, beispielsweise durch Verringern der Geschwindigkeit einfacher beherrschbar als Untersteuern.

Für Fehlersituationen mit einem zu hohen Drehmoment ergibt sich somit eine geringere Sicherheitseinstufung. Für den Drehmomentsensor kann bevorzugt auch hier eine geringere ASIL-Einstufung, konkret also statt einer ASIL-B- eine ASIL-A-Einstufung gewählt werden.

Für den abgesicherten Betrieb des elektrischen Wankstabilisators ist es während des Fahrbetriebs erforderlich, dessen Funktion fortwährend zu überwachen. Dieses kann bevorzugt mittels zumindest eines Sensors und/oder einer Steuerung respektive Steuergeräts durchgeführt werden. Dabei werden die Bauteile, wie z.B. der Motor, die Leistungselektronik und weitere elektrische Bauteile auf ihre Funktion hin überwacht. Dabei können in einem Steuergerät eine oder mehrere Kennlinien und/oder Kennfelder hinterlegt sein, so dass die Verdrehung der Wankstabilisatorhälften hinsichtlich ihrer Verdrehrichtung, Verdrehgeschwindigkeit und auch dem Verdrehmoment überwacht werden. Für die beispielhaft vorgenannten Kennwerte können mittels der Kennlinien und/oder Kennfelder Schwellwerte festgelegt sein, so dass bei Überschreiten der Antrieb (Elektromotor) des Wankstabilisators stromlos geschaltet wird oder in einen Sicherheitsbetrieb übergeht. In dem Sicherheitsbetrieb kann beispielsweise der Wankstabilisator in eine Nulllage gefahren und dort starr geschaltet werden, so dass sich dieser wie ein aus dem Stand der Technik bekannter passiver Wankstabilisator verhält.

Insbesondere nimmt das Steuergerät Berechnungen anhand zumindest eines Algorithmus vor. Der zumindest eine Algorithmus ist auf einem Speichermedium, welches bevorzugt innerhalb eines Steuergerätes vorhanden ist, gespeichert. Es wird auf einem Computer, der in dem zumindest einen Steuergerät vorhanden sein kann, ausgeführt.

Das Steuergerät kann im Wankstabilisator selbst oder außerhalb, z.B. im Fahrwerk angeordnet sein. Bevorzugt ist das Steuergerät mit weiteren Steuergeräten, z.B. mit dem ESP-Steuergerät verbunden. Die Steuergeräte kommunizieren bevorzugt über das im Fahrzeug vorhandene Bussystem, vorzugsweise CAN- oder Flexbus, miteinander. Über die im Steuergerät hinterlegten Kennlinien bzw. -felder kann im Sinne einer Plausibilitätsprüfung erkannt werden, ob ein Sensor unüblich hohe Drehmoment- oder Drehwinkelwerte anzeigt. Das Steuergerät kann in diesen Fällen in einen Sicherheitsbetrieb schalten und oben genannte Maßnahmen einleiten.

Je nach Anforderung können zusätzliche Fahrzeugwerte genutzt werden. Diese können beispielsweise über Sensoren im Fahrwerk gemessen und an das Steuergerät gesendet werden. So kann ein Höhenstandssignal über die Position einzelner Räder zur Karosserie ermittelt werden. Über im Fahrwerk vorhandene Sensoren können Nick- oder Wankbewegungen des Fahrzeugs und somit die Lage der Karosserie bzw. des Fahrzeugs gegenüber der Fahrbahn ermittelt werden, wenn diese Sensoren in Gelenke verbaut sind, die Fahrwerksbauteile miteinander verbinden. Hierzu können in Kugelgelenken, die als Trag- oder Führungsgelenk ausgebildet sind, vorzugsweise berührungslose Lagesensoren ausgebildet sein, die die Lageerfassung des Kugelzapfens zu seinem Gehäuse ermöglichen.

Alternativ kann das Steuergerät weitere verstellbare Bauteile zur Wankstabilisierung aktivieren bzw. steuern, um eine fehlerhafte Wankmomentverteilung aufgrund der oben genannten Fehlfunktionen zu minimieren. Hierzu können aktive Schwingungsdämpfersysteme oder in der Reibung verstellbare Kugelgelenke im Fahrwerk im Rahmen des möglichen angesteuert werden, um die Wankmomentverteilung zu verbessern, so dass für den Fahrer ein beherrschbares bzw. kontrollierbares Fahren möglich wird.

Zur weiteren Erläuterung der Erfindung wird auf die nachfolgende Beschreibung bevorzugter Ausführungsformen der Erfindung verwiesen. Es zeigen:
- Fig. 1: als schematische Darstellung eine Frontansicht auf ein mit einem verstellbaren Wankstabilisator versehenes Fahrwerk eines Kraftfahrzeugs,
- Fig. 2: ein Ablaufdiagramm zur Erläuterung eines Verfahrens gemäß der Erfindung.

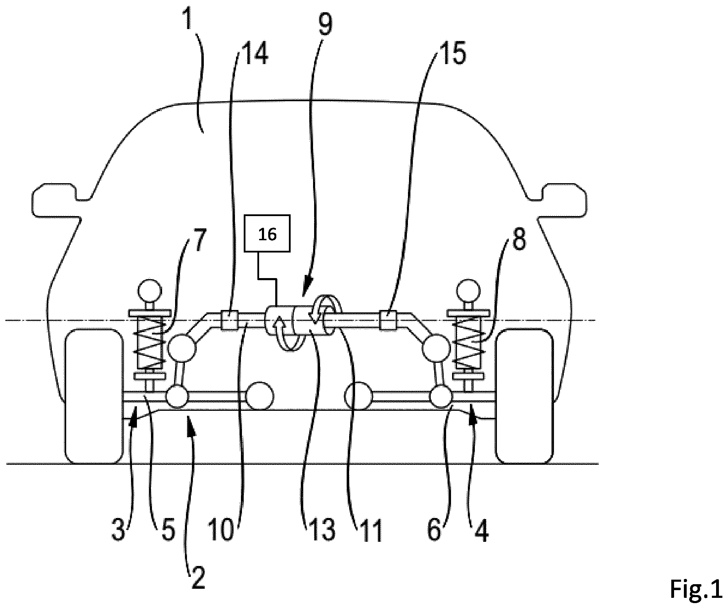

In Fig. 1 ist ein Fahrzeugaufbau 1 eines ein Fahrwerk 2 aufweisenden Kraftfahrzeugs bezeichnet. Das Fahrwerk 2 weist Radaufhängungen 3 und 4 auf, deren Lenker 5 und 6 über Federbeine 7 und 8 am Fahrzeugaufbau 1 abgestützt sind. Wie weiterhin aus der Darstellung hervorgeht, greift jeweils an den Radaufhängungen 3 und 4 mit seinen Enden ein verstellbarer Wankstabilisator 9 an. Es handelt sich dabei um einen in zwei Teilabschnitte 10 und 11 geteilten Stabilisator 12 mit einem zwischen den Teilabschnitten 10 und 11 angeordneten Aktuator 13.

Mittels dieses Aktuators 13 lassen sich zwischen den Teilabschnitten 10 und 11 unterschiedliche Torsionsmomente erzeugen, wodurch in Abhängigkeit von den Fahrzuständen des Personenkraftfahrzeugs zwischen dem Fahrzeugaufbau 1 und dem Fahrwerk 2 auftretenden Kräfte und Momente variiert werden können. Jeder der Teilabschnitte 10 und 11 ist dabei drehbar über ein Aufbaulager 14 und 15 am Fahrzeugaufbau 1 geführt. Eine Steuereinrichtung 16, der beliebige Messwerte, wie zum Beispiel eine Querbeschleunigung oder ein Wandwinkel zugeführt werden, ist mit dem Aktuator 13 verbunden.

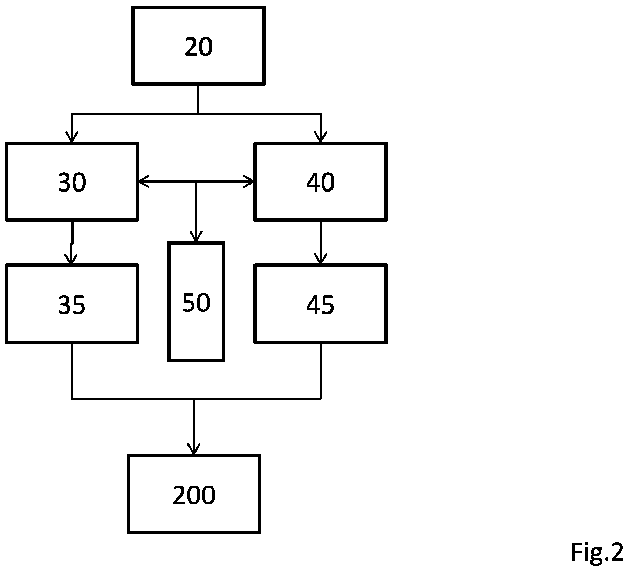

Figur 2 zeigt ein Ablaufdiagramm, welches mögliche Verfahrensschritte darstellt. Die gewählte Darstellung bedeutet keine zwingende Reihenfolge bei der Abarbeitung der genannten Schritte. Auch können weniger oder weitere Verfahrensschritte vorgesehen sein. In einem Schritt 20 wird von einem Steuergerät 16 fortwährend die Sensorik bzw. deren Signale im Wankstabilisator 9 ausgelesen und ausgewertet. In einem weiteren Schritt 30 wird im Steuergerät 16 die Verstellrichtung bzw. der Verstellweg verarbeitet, in dem die Signale des Verdrehwinkelsensors fortwährend ausgelesen werden. In einem weiteren Schritt 40 wird im Steuergerät 16 das Signal des Drehmomentsensors ausgelesen und verarbeitet. In Abhängigkeit der mit Schritt 50 fortwährend ausgelesenen Daten von Fahrzeugwerten, wie Fahrgeschwindigkeit, Querbeschleunigung und Lenkwinkel, bestimmt das Steuergerät, ob ein Fehler vorliegt. Insbesondere nimmt das Steuergerät Berechnungen anhand zumindest eines Algorithmus vor.

In einem Schritt 35 wird der maximale zulässige Verstellweg in Abhängigkeit von den zuvor genannten Fahrzeugwerten bestimmt und die Maximalwerte für den Verstellweg repräsentierenden Kennlinien entsprechend angepasst.

In einem Schritt 45 wird das maximale zulässige Drehmoment in Abhängigkeit von den zuvor genannten Fahrzeugwerten unter Berücksichtigung der zulässigen Toleranz von ±200 Nm bestimmt und mit Plausibilitätswerten verglichen.

In einem weiteren Schritt 200 gibt das Steuergerät 16 Steuersignale an den Wankstabilisator 9 weiter, so dass dieser mit geänderten Signalen, z.B. eingeschränktem Verstellweg oder geändertem Drehmoment betrieben bzw. gesteuert wird. Der Wankstabilisator 9 kann z.B. auch in Nullposition gefahren und starr geschaltet werden, so dass sich dieser wie ein herkömmlicher starrer Wankstabilisator verhält.

### Bezugszeichen

- 1: Fahrzeugaufbau
- 2: Fahrwerk
- 3: Radaufhängung
- 4: Radaufhängung
- 5: Lenker
- 6: Lenker
- 7: Federbein
- 8: Federbein
- 9: verstellbarer Wankstabilisator
- 10: Teilabschnitt
- 11: Teilabschnitt
- 13: Aktuator
- 14: Aufbaulager
- 15: Aufbaulager
- 16: Steuergerät
- 20, 30, 35, 40, 45, 50, 200: Verfahrensschritte

## Patentansprüche

1. Verfahren zum Betreiben eines elektrisch verstellbaren Wankstabilisators (9) für ein Fahrwerk (2) eines Kraftfahrzeugs (1) mit einem zwischen zwei Teilabschnitten (9, 10) des Wankstabilisators (9) angeordneten Aktuator (13), der die Teilabschnitte gegeneinander verstellen kann, wobei zumindest ein Sensor zur Erfassung des Verdrehwinkels und/oder des Drehmoments vorgesehen ist, wobei Signale zum Verdrehwinkel und/oder Drehmoment von zumindest einem Steuergerät (16) zur Steuerung des Aktuators (13) verarbeitet werden, **dadurch gekennzeichnet, dass** während des nach ASIL abgesicherten Betriebes des Wankstabilisators die Signale innerhalb des zumindest einen Steuergerätes mit maximalen und minimalen Kennwerten verglichen werden, wobei der maximale Verstellweg und/oder die maximale Drehmomentabgabe des Aktuators in Abhängigkeit von Fahrzeugkennwerten, vorzugsweise von Fahrzeuggeschwindigkeit und/oder Lenkwinkel und/oder Querbeschleunigung, bestimmt wird, um die Erfassung einer unbeabsichtigten Drehmomentabgabe in ein höherwertiges und ein niedrigeres Sicherheitsziel aufzulösen.

2. Verfahren nach Anspruch 1, wobei die Kennlinien und somit die maximalen und minimalen Schwellwerte in Abhängigkeit bestimmter Fahrzeugwerte, vorzugsweise von Fahrzeuggeschwindigkeit und/oder Lenkwinkel und/oder Querbeschleunigung, bestimmt werden.

3. Verfahren nach Anspruch 1 oder 2, wobei sich durch die bestimmten Schwellwerte ein Korridor ergibt, der repräsentativ für den maximalen Verstellweg und maximalen Verdrehwinkel ist.

4. Verfahren nach Anspruch 1 oder 2, wobei das mittels des zumindest einen Drehmomentsensors erfasste Signal mit in dem Steuergerät hinterlegten Kennwerten in Abhängigkeit von bestimmten Fahrzeugwerten, vorzugsweise von Fahrzeuggeschwindigkeit und/oder Lenkwinkel und/oder Querbeschleunigung, verglichen werden, um die erfassten Drehmomentwerte zu plausibilisieren.

5. Verfahren nach Anspruch 4, wobei in dem Steuergerät dem Drehmomentsignal eine Toleranzgrenze zugrunde gelegt wird, wobei die Toleranzgrenze bevorzugt etwa ±200 Nm betragen kann.

6. Verfahren nach einem der vorhergehenden Ansprüche, wobei zusätzlich über zumindest einen weiteren Sensor ein Höhenstandsignal und/oder ein Signal über die Lage von Fahrwerksbauteilen gegenüber der Karosserie des Fahrzeugs und/oder Fahrbahn bestimmt wird.

7. Verfahren nach einem der vorhergehenden Ansprüche, wobei das Steuergerät den Wankstabilisator in Abhängigkeit der Fahrsituation in Nulllage zurückfahren und starr schalten kann und/oder weitere verstellbare Fahrwerkbauteil, insbesondere in der Reibung verstellbare Kugelgelenke und/oder verstellbare Schwingungsdämpfer ansteuern kann, um die Wankmomentverteilung zu verbessern.

8. Steuergerät speziell eingerichtet zum Ausführen eines Verfahrens nach einem der vorhergehenden Ansprüche.

9. Steuergerät nach Anspruch 8, **dadurch gekennzeichnet, dass** in diesem Kennlinien hinterlegt sind, die in Abhängigkeit von Fahrzeugwerten, vorzugsweise von Fahrzeuggeschwindigkeit und/oder Lenkwinkel und/oder Querbeschleunigung, geändert werden können.

10. Steuergerät nach den Ansprüchen 8 bis 9, **dadurch gekennzeichnet, dass** dieses mit einem Fahrzeugbussystem, vorzugsweise CAN- und/oder Flexbus, verbunden ist und mit weiteren Steuergeräten über das jeweilige Bussystem kommuniziert.

## Claims

1. Method for operating an electrically adjustable roll stabilizer (9) for a chassis (2) of a motor vehicle (1), comprising an actuator (13) which is arranged between two subsections (9, 10) of the roll stabilizer (9) and can adjust the subsections in relation to one another, wherein at least one sensor for detecting the angle of twist and/or the torque is provided, wherein signals relating to the angle of twist and/or torque are processed by at least one controller (16) for controlling the actuator (13),
**characterized in that**, during the operation of the roll stabilizer which is secured in accordance with ASIL, the signals are compared with maximum and minimum characteristic values within the at least one controller, wherein the maximum adjustment path and/or the maximum torque output of the actuator are/is determined depending on vehicle characteristic values, preferably on vehicle speed and/or steering angle and/or lateral acceleration, in order to break up the detection of unintended torque output into a high-order and a lower safety target.

2. Method according to Claim 1, wherein the characteristic curves and therefore the maximum and minimum threshold values are determined depending on specific vehicle values, preferably on vehicle speed and/or steering angle and/or lateral acceleration.

3. Method according to Claim 1 or 2, wherein a corridor, which is representative of the maximum adjustment path and maximum angle of twist, is produced by the determined threshold values.

4. Method according to Claim 1 or 2, wherein the signal which is detected by means of the at least one torque sensor is compared with characteristic values which are stored in the controller depending on specific vehicle values, preferably on vehicle speed and/or steering angle and/or lateral acceleration, in order to check the plausibility of the detected torque values.

5. Method according to Claim 4, wherein a tolerance limit forms the basis of the torque signal in the controller, wherein the tolerance limit can preferably be approximately ±200 Nm.

6. Method according to one of the preceding claims, wherein a height signal and/or a signal relating to the position of chassis components in relation to the body of the vehicle and/or roadway is additionally determined by means of at least one further sensor.

7. Method according to one of the preceding claims, wherein the controller can reset the roll stabilizer to the zero position and rigidly switch the said roll stabilizer depending on the driving situation and/or can actuate further adjustable chassis components, in particular ball-and-socket joints which are adjustable with respect to friction and/or adjustable vibration dampers, in order to improve the roll moment distribution.

8. Controller especially designed for executing a method according to one of the preceding claims.

9. Controller according to Claim 8, **characterized in that** characteristic curves, which can be changed depending on vehicle values, preferably on vehicle speed and/or steering angle and/or lateral acceleration, are stored in the said controller.

10. Controller according to Claims 8 and 9, **characterized in that** it is connected to a vehicle bus system, preferably CAN bus and/or FlexBus, and communicates with further controllers via the respective bus system.

## Revendications

1. Procédé de fonctionnement d'un stabilisateur de roulis (9) à réglage électrique destiné à un mécanisme de roulement (2) d'un véhicule automobile (1) et comprenant un actionneur (13) qui est disposé entre deux portions (9, 10) du stabilisateur de roulis (9) et qui peut régler les portions l'une par rapport à l'autre, au moins un capteur étant prévu pour détecter l'angle de rotation et/ou le couple, des signaux relatifs à l'angle de rotation et/ou au couple étant traités par au moins une unité de commande (16) destinée à commander l'actionneur (13), **caractérisé en ce que**, dans l'au moins une unité de commande, les signaux sont comparés à des valeurs caractéristiques maximale et minimale pendant le fonctionnement, sécurisé selon ASIL, du stabilisateur de roulis, le trajet de réglage maximal et/ou la sortie de couple maximale de l'actionneur étant déterminés en fonction de valeurs caractéristiques du véhicule, de préférence la vitesse du véhicule et/ou l'angle de braquage et/ou l'accélération transversale, afin de décomposer la détection d'une sortie de couple involontaire en une cible de sécurité plus forte et une cible de sécurité plus faible.

2. Procédé selon la revendication 1, les courbes caractéristiques et donc les valeurs seuil maximale et minimale étant déterminées en fonction de valeurs de véhicule déterminées, de préférence la vitesse du véhicule et/ou l'angle de braquage et/ou l'accélération transversale.

3. Procédé selon la revendication 1 ou 2, les valeurs de seuil déterminées formant un couloir qui est représentatif du trajet de réglage maximal et de l'angle de rotation maximal.

4. Procédé selon la revendication 1 ou 2, le signal détecté par l'au moins un capteur de couple étant comparé à des valeurs caractéristiques mémorisées dans l'unité de commande en fonction de valeurs de véhicule déterminées, de préférence la vitesse du véhicule et/ou l'angle de braquage et/ou l'accélération transversale, afin de vérifier la plausibilité des valeurs de couple détectées.

5. Procédé selon la revendication 4, le signal de couple étant basé dans l'unité de commande sur une limite de tolérance, la limite de tolérance pouvant de préférence être d'environ ± 200 Nm.

6. Procédé selon l'une des revendications précédentes, un signal de hauteur et/ou un signal relatif à la position des composants du mécanisme de roulement par rapport à la carrosserie du véhicule et/ou de la chaussée est en outre déterminé par le biais d'au moins un autre capteur.

7. Procédé selon l'une des revendications précédentes, l'unité de commande pouvant ramener le stabilisateur de roulis à la position zéro en fonction de la situation de conduite et commuter de manière rigide et/ou commander d'autres composants réglables du mécanisme de roulement, en particulier des rotules à friction réglable et/ou des amortisseurs de vibrations réglables, afin d'améliorer la distribution de moments de roulis.

8. Unité de commande spécialement conçue pour mettre en œuvre un procédé selon l'une des revendications précédentes.

9. Unité de commande selon la revendication 8, **caractérisée en ce que** des courbes caractéristiques sont mémorisées dans ladite unité de commande et peuvent être modifiées en fonction de valeurs de véhicule, de préférence de la vitesse du véhicule et/ou de l'angle de braquage et/ou de l'accélération transversale.

10. Unité de commande selon les revendications 8 et 9, **caractérisée en ce qu'**elle est reliée à un système de bus de véhicule, de préférence un bus CAN et/ou un Flexbus, et **en ce qu'**elle communique avec d'autres dispositifs de commande par le biais du système de bus respectif.
